# EUROPÄISCHE PATENTSCHRIFT

(11) **EP 2 131 075 B1**
(45) Veröffentlichungstag und Bekanntmachung des Hinweises auf die Patenterteilung: **14.08.2013**
(21) Anmeldenummer: 09161745.6
(22) Anmeldetag: 03.06.2009
(51) Int. Cl.: F16H 61/688, F16H 61/12, F16H 61/682

(54) **System und Verfahren zum Betreiben eines automatisierten Getriebes bei Ausfall eines Motordrehzahlgebers oder einer Busverbindung zwischen Steuermodulen**
System and method for operating an automated transmission when a motor rotation indicator or a bus connection between control modules fails
Système et procédé de fonctionnement d'un boîte de vitesses robotisée en cas de panne d'un capteur de régime moteur ou d'une liaison de bus entre des modules de commandes

(30) Priorität: 03.06.2008 DE 102008027675
(43) Veröffentlichungstag der Anmeldung: 09.12.2009
(73) Patentinhaber: GETRAG Getriebe- und Zahnradfabrik Hermann Hagenmeyer GmbH & Cie KG, 74199 Untergruppenbach (DE); GETRAG Transmission Corporation, Sterling Heights, MI 48310 (US)
(72) Erfinder: Glatthaar, Josef, 78727 Oberndorf (DE); Kalisch, Tobias, 78050 Villingen-Schweningen (DE); Ottinger, Oliver, 78112 St. Georgen (DE); Palansky, Bruce, Westland Michigan 48185 (US)
(74) Vertreter: Witte, Weller & Partner

(56) Entgegenhaltungen:
- EP-A1- 0 385 244
- DE-A1- 10 361 299
- DE-A1- 19 919 537
- FR-A1- 2 834 034

## Beschreibung

Die vorliegende Erfindung betrifft ein System und Verfahren zum Fortsetzen eines Gangwechselbetriebs eines automatisierten Getriebes für ein Kraftfahrzeug, bei dem ein Motordrehzahlgeber oder eine Datenverbindung in Form einer Datenbusleitung zwischen zumindest zwei Steuermodulen ausfällt, die miteinander wechselwirkende Komponenten eines Antriebsstrangs ansteuern und Gangwechsel-relevante Daten miteinander über den Bus austauschen.

Bei herkömmlichen automatisierten Getrieben für Kraftfahrzeuge werden verschiedenen Komponenten, wie z.B. Motor und Getriebe, üblicherweise von unterschiedlichen Steuermodulen angesteuert, die auch in Form einer zentralen Steuereinrichtung implementiert sein können. Doppelkupplungsgetriebe im Besonderen benötigen eine entsprechende elektronische Steuerung, um die komplexen und diffizilen Schaltungsvorgänge in den zwei parallelen Teilgetrieben (Zweigen) des Doppelkupplungsgetriebes, denen jeweils eine eigene Reibkupplung (trocken- oder nasslaufend) zugeordnet ist, gewährleisten zu können. Die Eingangsglieder der Reibkupplungen sind dort mit einer Antriebseineinheit verbunden, wie z.B. einem Verbrennungsmotor. Die Antriebseinheit kann jedoch auch ein Elektromotor oder eine Hybridantriebseinheit sein. Dem einen Teilgetriebe sind die ungeraden Gangstufen (1, 3, 5, ...) zugeordnet. Dem anderen Teilgetriebe sind die geraden Gangstufen (2, 4, 6, ...) zugeordnet. Die Übertragung von Antriebsleistung von der Antriebseinheit auf angetriebene Räder eines Kraftfahrzeugs erfolgt generell über eines der zwei Teilgetriebe. In dem jeweils nicht aktiven (inaktiven) Teilgetriebe ist in der Regel eine Gangstufe vorgewählt. Ein Gangwechsel von dem Start- bzw. Quellgang des aktiven Teilgetriebes zu dem Zielgang des nicht aktiven Teilgetriebes kann dann durch Überschneiden der Betätigung der eingangsseitigen Reibkupplungen erfolgen. Diese überschneidende Betätigung kann dabei so ausgeführt werden, dass keine Zugkraftunterbrechung während des Gangwechsels auftritt.

Das dazu erforderliche Ansteuern der Reibkupplungen und das Ein- und Auslegen von Gangstufen erfolgt aufgrund der Komplexizität des Vorgangs automatisiert, und zwar mittels einer übergeordneten Steuereinheit. Diese Steuereinheit wählt das über die jeweiligen Reibkupplungen zu übertragende Drehmoment in Form einer Motorsteuerung und die in den jeweiligen Teilgetrieben eingestellten Übersetzungen in Form einer Kupplungs- und Getriebesteuerung so, dass diese an die aktuelle Fahrsituation (Geschwindigkeit des Fahrzeugs, Zug- oder Schubbetrieb, etc.) angepasst sind.

Während eines Schaltvorgangs kontrolliert das Motorsteuerungsmodul üblicherweise die Drehzahl bzw. das Drehmoment des Motors derart, dass ein zugkraftunterbrechungsfreier Gangwechsel möglich ist, während das Getriebesteuermodul Synchronisierungseinrichtungen der Gangstufen öffnet und/oder schließt, d.h. z.B. einen Quellgang auslegt und einen Zielgang danach einlegt. Die Steuermodule kommunizieren dabei herkömmlicherweise über eine Datenbusverbindung, wie z.B. den CAN-(Controller Area Network-)Bus. Das Getriebesteuermodul kontrolliert während eines Gangwechsels üblicherweise das Motorsteuermodul.

Beim CAN-Bus handelt es sich um ein asynchrones, serielles Bussystem, das für die Vernetzung von Steuergeräten in Automobilen entwickelt wurde. Der CAN-Bus arbeitet nach dem CSMA/CR-(Carrier Sense Multiple Access/Collission Resolution-)Verfahren. Ein CAN-Netzwerk wird üblicherweise als Linienstruktur aufgebaut. Stichleitungen sind in eingeschränktem Umfang zulässig. Des Weiteren sind auch ringförmige Busse sowie sternförmige Busse (z.B. Zentralverriegelung) möglich.

Fällt diese Busverbindung zwischen den Steuermodulen aber aus, z.B. aufgrund eines Kabelbruchs, kommt es bei herkömmlichen Kraftfahrzeugen mit automatisierten Getrieben zu einem Stillstand des Kraftfahrzeugs. Zum Wechseln der Gänge braucht das Getriebesteuermodul zumindest die Information über die Drehzahl des Motors, um ggf. (in umgekehrter Richtung der Datenübertragung) die Motorsteuerung entsprechend zu beeinflussen. Dies gilt umso mehr bei Doppelkupplungsgetrieben. Während die Trennkupplung(en) geöffnet und geschlossen wird bzw. werden, regelt das Motorsteuerungsmodul üblicherweise die Motordrehzahl, z.B. auch über eine Drosselklappenstellung. Die Motordrehzahl wiederum beeinflusst das über die Trennkupplung übertragbare Drehmoment. Besonders beim Anfahren, d.h. wenn die Trennkupplung eines Kraftfahrzeugs, bei dem zuvor im Stillstand ein Gang eingelegt wurde, geschlossen wird, ist es üblicherweise erforderlich, die Motordrehzahl entsprechend nachzuregeln, um den Motor nicht absterben zu lassen.

Die DE 691 11 625 T2 betrifft ein Verfahren zum Feststellen eines Sensorfehlers in einem automatischen Getriebe, mit einem Anlassschalter, einer Kupplung zum Übertragen der Arbeitsleistung eines Motors, einem Getriebe, einem ersten Detektor zum Erfassen der Drehzahl des Motors, einem zweiten Detektor zum Erfassen der Ausgangsdrehzahl der Kupplung und einem Gangpositionsdetektor zum Erfassen der Gangposition des Getriebes. Der Ausgang des Motordrehzahlsensors wird zu einer Hauptsteuereinheit geleitet, um unterschiedliche Steueraufgaben wahrzunehmen, wie etwa die Kraftstoffversorgungssteuerung. Die Steuereinheit kann aufgrund elektrisch instabiler Zustände beim Starten des Anlassmotors fehlerhaft feststellen, dass der Motordrehzahlsensor einen Fehler aufweist. Wenn der Motordrehzahlsensor beim eingeschalteten Anlassschalter kein Ausgangssignal liefert, stellt der Fehlerdetektor fest, dass der Motordrehzahlsensor fehlerhaft ist, sofern der Eingangswellensensor ein Ausgangssignal liefert, wenn die Kupplung zeitweilig durch Ansteuern einer Kupplungssteuerungseinheit, die aus der Kupplungsantriebseinheit und der Kupplungsbetätigung besteht, eine Verbindung herstellt.

Die europäische Patentanmeldung EP 1 067 008 A2 offenbart eine Kupplungskennlinienadaption bei einem Doppelkupplungsgetriebe.

Die internationale Anmeldung WO 2005/065982 A1 offenbart ein Schaltverfahren bei einem Sensorausfall für ein automatisiertes Schaltklauengetriebe.

Die französiche Anmeldung FR 2 834 034 A1 offenbart ein verfahren zum Aufrechterhalten eines Gangwechselbetriebs eines automatisierten Getriebes für ein Kraftfahrzeug bei einem Ausfall eines Motordrehzahlgebers, mit den folgenden schritten: überprüfen, ob eine Drehzahl einer Motorwelle, die von einem dafür bestimmten Sensor erfasst wird, plausibel ist; Wenn die Drehzahl nicht plausibel ist und die Trennkupplung geschlossen ist: Erfassen einer Drehzahl der Getriebewelle, die mit der Motorwelle über die Trennkupplung verbunden ist, mittels eines dafür bestimmten sensors, wobei basierend auf der erfassten Drehzahl, in Reaktion auf einen Gangwechselbefehl, ein Vorgang zum Wechseln eines Gangs des Getriebes initiiert wird.

Es ist daher eine Aufgabe der vorliegenden Erfindung, ein System und Verfahren zum Fortsetzen des Betriebs eines automatisierten Getriebes bei Ausfall eines Motordrehzahlgebers oder einer Datenbusverbindung zwischen Steuermodulen zu gewährleisten, die für unterschiedliche Komponenten des Antriebsstrangs eines Kraftfahrzeugs verantwortlich sind, die wiederum während eines Gangwechsels aufeinander abzustimmen sind.

Diese Aufgabe wird durch ein Verfahren gelöst zum Aufrechterhalten des Gangwechselbetriebs eines automatisierten Getriebes, insbesondere eines Doppelkupplungsgetriebes, für ein Kraftfahrzeug bei einem Ausfall eines Motordrehzahlgebers oder einer Busverbindung zwischen einem ersten Steuermodul, das einen über mindestens eine Trennkupplung mit dem Getriebe verbindbaren Motor ansteuert, und einem zweiten Steuermodul, das Stellglieder (z.B. Synchronisierungseinrichtungen und/oder Trennkupplungen) zum kraftübertragenden Verbinden des Motors mit dem Getriebe bzw. mit einem oder mehreren Antriebsrädern ansteuert, wobei über die Busverbindung gangwechselrelevante Daten, vorzugsweise eine Motordrehzahl, zwischen den Steuermodulen ausgetauscht werden, mit den folgenden Schritten: Überprüfen, ob eine Drehzahl einer Motorwelle, die von einem dafür bestimmten Sensor eines der Steuermodule erfasst wird, von dem einem Steuermodul über die Busverbindung an das andere Steuermodul übertragbar ist; und Durchführen der folgenden Schritte, wenn die Drehzahl nicht übertragbar ist: Öffnen aller dem Getriebe bzw. einem Teilgetriebe zugeordneten Synchronisierungseinrichtungen, so dass von der Motorwelle keine Kraft mehr über eine Getriebewelle an das bzw. die Antriebsräder des Kraftfahrzeugs übertragbar ist; Schließen der Trennkupplung, die dem Getriebe bzw. dem Teilgetriebe mit den geöffneten Synchronisiereinrichtungen zugeordnet ist, falls die Trennkupplung nicht geschlossen ist; Erfassen einer Drehzahl einer anderen Welle, insbesondere der Getriebewelle, die mit der Welle über die Trennkupplung verbindbar ist, mittels eines dafür bestimmen Sensors des anderen Steuermoduls; und Bestimmen einer Gangwechselrampenfunktion für eines der Steuermodule, vorzugsweise für das zweite Steuermodul, basierend auf der erfassten Drehzahl, insbesondere aus einem Kennlinienfeld, um einen Schaltvorgang von einem Quellgang in einen Zielgang durchführen zu können, basierend auf der erfassten (Motor-)Drehzahl, und ggf. auf der Stellung des Gasbetätigungselements, in Reaktion auf einen Gangwechselbefehl, der entweder von einem der Steuermodule oder einem Betreiber des Fahrers mitgeteilt wird, ein Vorgang zum Wechseln eines Gangs des Getriebes initiiert, indem vorzugsweise die geeignete Gangwechsel-Rampenfuntion bestimmt wird.

Auf diese Weise ist es möglich, Informationen über die Motordrehzahl zu gewinnen, obwohl der dafür vorgesehene Sensor ausgefallen ist oder die Datenbusverbindung zwischen der Motorsteuerung und der Kupplungs- und Getriebesteuerung ausgefallen ist. Im Stand der Technik werden dazu redundante Sensoren bzw. redundante Bussysteme vorgesehen. Dies erübrigt sich aufgrund der vorliegenden Erfindung. Man spart sich somit die Bereitstellung eines zweiten Satzes von Komponenten, wodurch erhebliche Kosten- und Gewichtseinsparungen erzielt werden können. Das Kraftfahrzeug ist nach einem Ausfall eines Sensors oder der Datenbusverbindung trotzdem betriebsfähig, wenn auch nur eingeschränkt.

Im besonderen Falle eines Doppelkupplungsgetriebes kann die Motordrehzahl sogar permanent erfasst werden. Die Kupplungs- und Getriebesteuerung kann die Drehzahl des Motors zu jedem Zeitpunkt abrufen, obwohl die Busverbindung gestört ist, und so geschickt auf die für einen Gangwechsel verantwortlichen Stellglieder, wie z.B. die Trennkupplung einwirken, um einen Gang zu wechseln, ohne das Getriebe zu beschädigen bzw. den Motor absterben zu lassen.

Hier kommt wieder der Gedanke zum Ausdruck, dass das Kraftfahrzeug trotz eines Fehlers nicht liegen bleiben soll. Wenn die automatisierte Schaltung auch auf Wunsch des Fahrers (z.B. Tiptronic) betätigt werden kann, bleibt es dem Fahrer unbenommen, trotzdem zu schalten.

Gemäß einer bevorzugten Ausführungsform repräsentiert die Gangwechselrampenfunktion einen oder mehrer Parameter aus der Gruppe aufweisend Parameter für eine Quellgang-Motordrehzahl, eine Zielgang-Motordrehzahl, eine Gaspedalstellung und/oder eine Drosselklappenstellung, und/oder einen zeitabhängigen Verstellweg für Kupplungselemente der dem Zielgang zugeordneten Trennkupplung.

Die Gangwechselrampenfunktion ist im Wesentlichen von der Motordrehzahl abhängig. Die anderen Größen beeinflussen die Gangwechselrampenfunktion ebenfalls. Es macht z.B. einen Unterschied, ob man hochschaltet, herunterschaltet oder anfährt. Mit Hilfe der Gangwechselrampenfunktion wird sichergestellt, dass ein Gangwechsel trotz ausgefallenen Motordrehzahlsensor und/oder trotz ausgefallener Busverbindung sicher bewerkstelligt werden kann. Vorzugsweise wird die Drehzahl über einen vordefinierten Zeitraum erfasst, um eine Drehzahlhistorie zu erzeugen, aus der man ableiten kann, ob ein Gangwechsel ansteht oder nicht.

Weiter ist es von Vorteil, wenn aus der erfassten Drehzahl eine Stellung eines Gasbetätigungselements abgeleitet wird.

Aus der Stellung des Gasbetätigungselements lässt sich der vom Fahrer initiierte Gangwechselwunsch ableiten. Erhöht sich die Drehzahl des Motors steig, so ist davon auszugehen, dass der Fahrer das Fahrzeug beschleunigt. Verringert sich die Drehzal, so ist davon auszugehen, dass der Fahrer nicht genügend (Bergauffahrt) oder gar kein Gas gibt.

Weiter ist es von Vorteil, wenn die Trennkupplung geöffnet, ggf. eine Synchronisierungseinrichtung eines eingelegten Quellgangs geöffnet, ein geeigneter Zielgang durch Schließen einer zugehörigen Synchronisierungseinrichtung eingelegt und die Trennkupplung anschließend erneut geschlossen wird.

Gemäß einer weiteren bevorzugten Ausführungsform wird die Gangwechselrampenfunktion während des Zeitraums zwischen dem Öffnen und erneuten Schließen der Trennkupplung verwendet, um auf Stellglieder einzuwirken, die am Gangwechselvorgang beteiligt sind.

Der Gangwechselvorgang stellt den kritischen Zeitraum dar, bei dem sich die Motordrehzahl drastisch ändern kann. Im Falle eines Doppelkupplungsgetriebes wird aufgrund der Messung der Drehzahl des inaktiven Teilgetriebes trotzdem permanent die Motordrehzahl bereitgestellt. Bei einem einfachen automatisierten Getriebe ist der Gangwechselvorgang möglichst schnell durchzuführen, da während des Gangwechsels selbst keine Information zur Motordrehzahl vorliegt. Es gibt einen mitunter sehr kleinen Zeitraum, wo keine der Trennkupplungen geschlossen ist.

Deshalb ist das erfindungsgemäße Verfahren besonders gut bei Doppelkupplungsgetrieben anwendbar, weil es dort möglich ist, die Motordrehzahl permanent abzugreifen.

Außerdem ist es von Vorteil, wenn abgefragt wird, ob eine Information zu einer aktuellen Stellung eines Gasbetätigungselements in Form eines Gasbetätigungsparameters über die Busverbindung übertragbar ist; wobei wenn keine Information übertragbar ist, die erfasste Drehzahl abgefragt wird, die erfasste Drehzahl mit einem Schwellenwert verglichen wird, wobei der Schwellenwert eine vordefinierte Motordrehzahl ist, wobei die vordefinierte Motordrehzahl einer vordefinierten Stellung des Gasbetätigungselements in einem betätigten Zustand entspricht; und wenn die erfasste Drehzahl kleiner als der Schwellenwert wird, ein Gasbetätigungsparameter auf Null eingestellt wird, so dass eine Stellung des Gasbetätigungselements in einer unbetätigten Stellung repräsentiert wird, oder wenn die erfasste Drehzahl größer als der Schwellenwert ist, der Gasbetätigungsparameter um einen der Differenz entsprechenden Wert erhöht wird.

Auf diese Weise ist es möglich, aus der ermittelten Motordrehzahl auch den Fahrerwunsch (Beschleunigen, Verlangsamen, Cruisen, etc.) abzuleiten.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein schematisiertes Blockdiagramm eines Antriebsstrangs gemäß der vorliegenden Erfindung;
- Fig. 2: den zeitlichen Verlauf der Drehzahlen (Fig. 2A) und der Drehmomente (Fig. 2B) bei einem Gangwechsel ohne Störung bzw. den zeitlichen Verlauf der Drehzahlen (Fig. 2C) und der Drehmomente (Fig. 2D) beim Vorliegen einer Störung;
- Fig. 3: ein Flussdiagramm zu einem Verfahren der vorliegenden Erfindung; und
- Fig. 4: ein vereinfachtes Flussdiagramm zu einer weiteren Ausführungsform des erfindungsgemäßen Verfahrens.

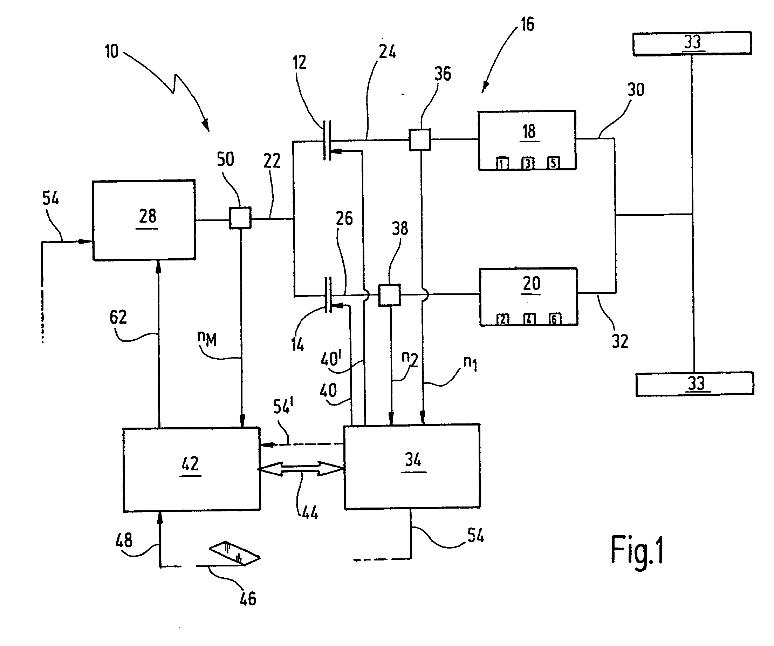

In Fig. 1 ist ein vereinfacht dargestellter Antriebsstrang 10 eines Kraftfahrzeugs mit einem Doppelkupplungsgetriebe 16 gezeigt.

Der Antriebsstrang 10 umfasst zwei als Trenn- bzw. Anfahrkupplungen wirkende Reibkupplungen 12, 14 für ein erstes Teilgetriebe 18 und ein zweites Teilgetriebe 20. Das erste Teilgetriebe 18 repräsentiert hier exemplarisch den ersten, den dritten und den fünften Gang. Das zweite Teilgetriebe 20 repräsentiert hier exemplarisch den zweiten, vierten bzw. sechsten Gang. Obwohl hier ein Doppelschaltgetriebe gezeigt ist, lassen sich die nachfolgenden Erläuterungen und Konzepte bei entsprechender Anpassung auch auf einfache Stufengetriebe anwenden.

Die Trennkupplungen 12, 14 sind einfache Reibungskupplungen, die jeweils mittels eines nicht näher dargestellten Kupplungsaktuators betätigt werden können. In einer geschlossenen Stellung verbindet die erste Trennkupplung 12 eine Motorabtriebswelle 22 kraftschlüssig mit einer ersten Getriebeeingangswelle 24. Entsprechendes gilt für den zweiten Getriebestrang. Die zweite Trennkupplung 14 verbindet in ihrer geschlossenen Stellung die Motorabtriebswelle 22 kraftschlüssig mit einer zweiten Getriebeeingangswelle 26. In einer geöffneten Stellung sind die zwei Wellen 22, 24 bzw. 22, 26 voneinander getrennt. Während des Öffnens und Schließens der Trennkupplung 12 bzw. 14 durchläuft die jeweilige Trennkupplung eine Schleifphase. Hierbei treten zwei Elemente der Trennkupplung mit unterschiedlichen Drehzahlen reibend miteinander in Eingriff. Bei einem sog. "Schlepppunkt" hat der Kupplungsaktuator die beiden mit unterschiedlicher Drehzahl drehenden Kupplungselemente gerade so nah aneinander gerückt, dass ein vordefiniertes Schleppdrehmoment von der Motorabtriebswelle 22 auf die Getriebeeingangswelle 24 und/oder 26 übertragen wird. Die Kupplungselemente weisen dann aber weiterhin unterschiedliche Drehzahlen auf.

Das Getriebe 16 überträgt die Leistung eines Motors 28 des Kraftfahrzeugs von der jeweils gewählten Getriebeeingangswelle 24 bzw. 26, die von der Motorabtriebswelle 22 angetrieben wird, auf eine jeweilige Getriebeausgangswelle 30, 32, die auch als Abtriebswellen 30, 32 bezeichnet werden. Die Teilgetriebe 18, 20 umfassen jeweils eine Mehrzahl von hier nicht dargestellten Radsätzen. Jeder Radsatz umfasst mindestens zwei Zahnräder. Zwischen den Radsätzen ist an den Abtriebswellen 30 bzw. 32 eine als Synchronisierungseinrichtung ausgebildete Schaltkupplung angeordnet. Die Synchronisierungseinrichtung ist beim Einlegen eines Gangs in der Lage, Differenzdrehzahlen zwischen der Motorabtriebswelle 22 und dem mit dieser zu verbindenden Zahnrad auf Null zu reduzieren, um somit die beiden Getriebebauteile zu synchronisieren. Die übertragende Kraft wird dann auf ein oder mehrere Antriebsräder 33 übertragen. Nähere Details zum Aufbau eines einfachen Stufengetriebes finden sich exemplarisch in der DE 10 2008 008 065.9, die den Titel "Vorrichtung und Verfahren zum Verhindern von Fehlschaltungen in automatischen Getrieben von Kraftfahrzeugen" trägt und die am 01.02.2008 für die vorliegende Anmelderin angemeldet wurde.

Das Kraftfahrzeug, in das der Antriebsstrang 10 eingebaut ist, umfasst ferner zumindest ein Kupplungs- und Getriebesteuerungsmodul 34 sowie ein Motorsteuerungsmodul 42.

Die Kupplungs- und Getriebesteuerung 34 ist mit Drehzahlsensoren 36, 38 verbunden, um die Drehzahlen n₁ bzw. n₂ der ersten Getriebeeingangswelle 24 bzw. der zweiten Getriebeeingangswelle 26 zu erfassen. Des Weiteren übermittelt die Kupplungs- und Getriebesteuerung 34 über die Leitungen 40, 40' Kupplungssignale an die hier nicht dargestellten Kupplungsaktoren, um die Trennkupplungen 12, 14 bzw. deren Verstellelemente zu betätigen.

Das Motorsteuerungsmodul 42 kommuniziert über eine Datenbusverbindung 44 mit dem Kupplungs- und Getriebesteuerungsmodul 34. Es versteht sich, dass sowohl für die Kupplungssteuerung als auch für die Getriebesteuerung jeweils ein eigenständiges Modul vorgesehen werden könnte.

Das Motorsteuerungsmodul 42 erfasst ferner üblicherweise die Stellung eines Gasbetätigungselements, wie z.B. die Stellung eines Gaspedals 46, das in Fig. 1 schematisiert dargestellt ist. Die Information über die Stellung des Gaspedals 46 wird in Form eines Signals 48 an die Motorsteuerung 42 geliefert. Die Motorsteuerung 42 erhält als weiteres Eingangssignal eine Drehzahl n_{M} der Motorabtriebswelle 22 von einem Drehzahlsensor 50, der die Drehung der Motorabtriebswelle 22 erfasst. Die Drehzahl n_{M} des Motors sowie das Gaspedalstellungssignal 48 werden dem Steuermodul 34 üblicherweise über die Datenbusverbindung 44, wie z.B. über einen CAN-Bus, bereitgestellt. Basierend auf diesen Informationen können Schaltvorgänge eingeleitet und durchgeführt werden. Das Steuermodul 34 erzeugt dazu insbesondere Motorsteuerungsbefehle 52, mit der üblicherweise über die Motorsteuerung 42 die Drehzahl n_{M} des Motors 28 während des Schaltvorgangs beeinflusst wird. Das Signal 52 könnte z.B. zum Verändern einer Drosselklappenstellung verwendet werden.

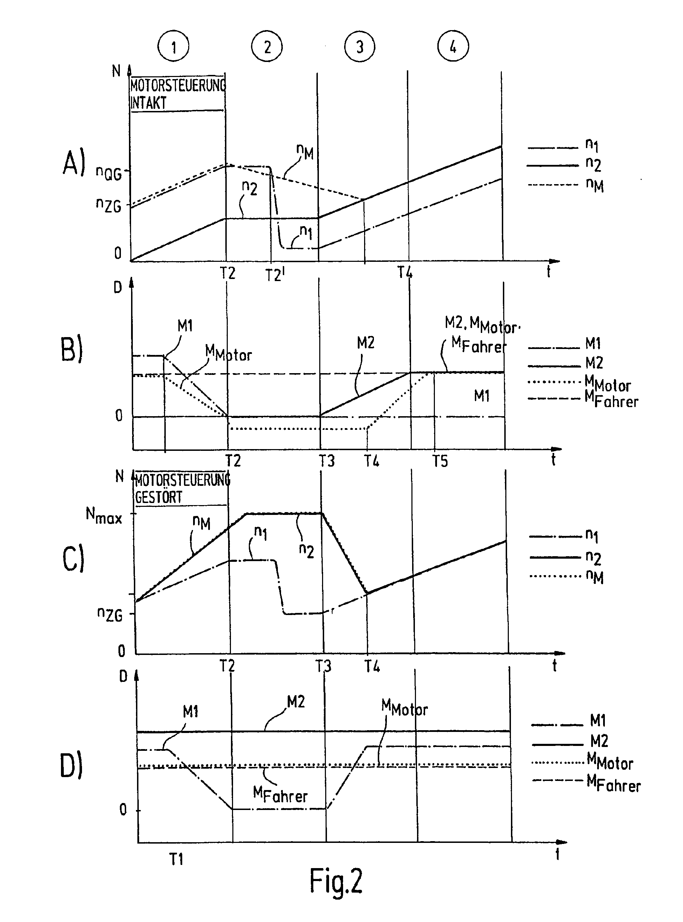

Fällt nun, aus welchem Grunde auch immer, die Datenbusverbindung 44 aus, fehlen dem Steuermodul 34 wichtige Parameter, insbesondere die Drehzahl n_{M} des Motors sowie die Stellung des Gaspedals, um einen Gangwechsel vorzunehmen. Analoges gilt bei einem Ausfall eines Motordrehzahlgebers. Wie wichtig es ist, Kenntnis von der Motordrehzahl n_{M} sowie vorzugsweise von der Stellung z.B. des Gaspedals - alternativ wäre auch die Kenntnisse der Stellung der Drosselklappe ausreichend - zu habe. Dies wird im nachfolgenden unter Bezugnahme auf die Figuren 2 erläutert werden.

Fig. 2 zeigt den zeitlichen Ablauf der Getriebedrehzahlen (Fig. 2A) und der anliegenden Drehmomente (Fig. 2B) beim Vorliegen einer Störung der Steuerung. Eine Störung kann z.B. durch den Ausfall der Busverbindung 44 oder durch den Ausfall des Motordrehzahlsensors 50 bedingt sein. Der Verlauf der Drehzahlen und der Drehmomente im Falle einer Störung ist in den Fig. 2C und 2D gezeigt und mit "MOTORSTEUERUNG GESTÖRT" gekennzeichnet. Der Normalbetrieb ist exemplarisch mit "MOTORSTEUERUNG INTAKT" gekennzeichnet. Es versteht sich, dass diese Kurven nicht nur beim Ausfall eines (CAN-)Busses, sondern auch beim Ausfall des Sensors 50 entsprechend gelten.

Die Fig. 2 zeigt einen Gangwechsel beim Hochschalten unter Zug. Es versteht sich, dass die nachfolgenden Erläuterungen analog auf ein Hochschalten unter Schub, ein Runterschalten unter Zug sowie ein Runterschalten unter Schub anwendbar sind. Es sind jeweils vier zeitliche Phasen dargestellt, die nachfolgend näher erläutert werden.

In Fig. 2A sind die zeitlichen Abläufe der verschiedenen Drehzahlen der Teilgetriebewellen sowie der Motorwelle 22 gezeigt. Die Welle des ersten Teilgebtriebes dreht mit der Drehzahl n₁. Die Welle des zweiten Teilgetriebes dreht mit der Drehzahl n₂. Der Motor dreht mit der Drehzahl n_{M}. n₁ ist mit einer strichpunktierten Linie dargestellt. n₂ ist mit einer durchgezogenen Linie dargestellt. n_{M} ist mit einer punktierten Linie gezeigt. In den anderen Fig. 2B bis 2D erfolgt die Zuordnung zu den einzelnen Antriebsstrangkomponenten analog.

Zum Beginn der Phase 1 wird im Normalfall, insbesondere bei funktionsfähigem Sensor 50 sowie stabiler Datenverbindung 44, entweder vom Fahrer oder durch die (übergeordnete) Kupplungs- und Getriebesteuerung 34 die Entscheidung gefällt, einen Gang zu wechseln. Nachfolgend wird davon ausgegangen, dass ein Gangwechsel vom dritten Gang in den vierten Gang unter Zug vorgenommen werden soll. Der dritte Gang ist der Quellgang (QG). Der vierte Gang ist der Zielgang (ZG).

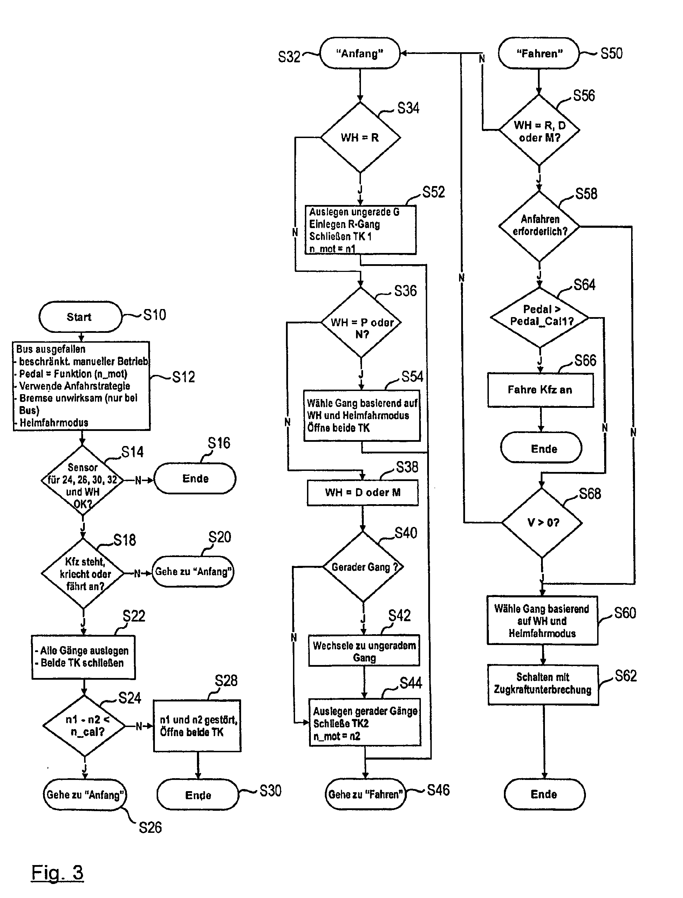

Wie man in Fig. 2B, die der Fig. 3A zugeordnet ist, erkennt, wird zu Beginn der Phase 1 die Trennkupplung 12, die dem Teilgetriebe 18 zugeordnet ist, das den dritten Gang umfasst, geöffnet. Zu einem Zeitpunkt T1 erreicht die Trennkupplung 12 ihren Schlepppunkt. Ab diesem Moment fällt das Drehmoment des ersten Teilgetriebes 18 ab, da die kraftschlüssige Verbindung zwischen Motorabtriebswelle 22 und erster Getriebeeingangswelle 24 Stück für Stück gelöst wird. Auch das vom Motor 28 erzeugte Drehmoment M_{Motor} fällt ab diesem Moment ab. Das vom Fahrer angeforderte Drehmoment M_{Fahrer} bleibt gleich, da davon ausgegangen wird, dass der Fahrer mit seinem Fuß konstant auf dem Gaspedal 46 steht. Das vom zweiten Teilgetriebe 20 übertragene Drehmoment M₂ ist Null, obwohl der vierte Gang bereits eingelegt ist. Wenn der vierte Gang eingelegt ist, ist die zweite Getriebeeingangswelle 26 kraftschlüssig mit der zweiten Getriebeausgangswelle 32 verbunden. Da die Räder 33 rollen, steigt die Drehzahl n₂ des zweiten Teilgetriebes 20 proportional zur Drehzahl des ersten Teilgetriebes 18, das die Räder 33 antreibt. Es versteht sich, dass der vierte Gang auch erst zu einem späteren Zeitpunkt eingelegt werden könnte. Dann sähe die Kurve (durchgezogene Linie) für die Drehzahl n₂ des zweiten Teilgetriebes 20 jedoch anders aus. Ferner versteht sich, dass vorliegend die zweite Trennkupplung 14 während der ersten Phase geöffnet ist.

Zum Zeitpunkt T2 ist die erste Trennkupplung 12 vollständig geöffnet. Das Motordrehmoment M_{Motor} fällt unter Null, da der Motor aufgrund innerer Reibung gebremst wird. Zum Zeitpunkt T2 wird damit begonnen, die Synchronisierungseinrichtung des dritten Gangs zu öffnen. Wie man in Fig. 2A sieht, fällt die Drehzahl n₁ des ersten Teilgetriebes 18 zum Zeitpunkt T2' auf einen Wert ab, der größer Null ist und der Drehzahl der ersten Getriebeausgangswelle 30 entspricht, die sich aufgrund der rollenden Räder 33 weiterhin dreht. Es versteht sich, dass diese Drehzahl lediglich aus Gründen der Einfachheit weiterhin mit n₁ bezeichnet ist, obwohl mit n₁ oben (nur) die Drehzahl der ersten Getriebeeingangswelle 24 bezeichnet war. Die erste Getriebeausgangswelle 30 kann optional ebenfalls mit einem Drehzahlsensor (in Fig. 1 nicht gezeigt) zusammenwirken, um die Drehzahl des ersten Teilgetriebes 18 jederzeit bestimmen zu können.

Aufgrund eines Eingriffs der Motorsteuerung 42 fällt die Motordrehzahl n_{M} ab dem Zeitpunkt T2 ab. Das zweite Teilgetriebe 20 (mit bereits eingelegtem vierten Zielgang) dreht weiterhin mit der Drehzahl n₂, die aufgrund mangelnder Drehmomentzuführung konstant bleibt, wenn man Reibungsverluste außer Betracht lässt.

Mit dem Beginn der dritten Phase beginnt man zum Zeitpunkt T3 damit, die zweite Trennkupplung 14 zu schließen. Ab dem Zeitpunkt T3 wird vom Motor 28 über die zweite Trennkupplung 14 ein Drehmoment übertragen, wie es sich in einem ansteigenden Drehmoment M₂ des zweiten Teilgetriebes 20 in Figur 2B äußert.

Zum Zeitpunkt T4 erreicht die zweite Trennkupplung 14 ihren Schlepppunkt. Die Motordrehzahl n_{M} und die Drehzahl des zweiten Teilgetriebes 20 sind dann gleich. Die Wellen 22 und 26 sind über die zweite Trennkupplung 14 in Eingriff miteinander. Dies äußert sich in Fig. 2A in der dritten Phase dadurch, dass die punktierte Motordrehzahllinie n_{M} die durchgezogene Drehzahllinie n₂ des zweiten Teilgetriebes 20 trifft. Ab diesem Zeitpunkt T4 regelt die Kupplungs- und Getriebesteuerung 34 den Motor 28 derart, dass das vom Motor auf das jeweilige Teilgetriebe übertragene Drehmoment M_{Motor} wieder ansteigt, bis es zu einem Zeitpunkt T5 das vom Fahrer gewünschte Drehmoment M_{Fahrer} erreicht hat. Der Zeitpunkt T 5 kann in der dritten Phase oder der vierten Phase liegen. Der Gangwechselvorgang ist dann abgeschlossen.

Unter Bezugnahme auf die Fig. 2C und 2D wird nachfolgend der zeitliche Ablauf der Drehzahlen bzw. der Drehmomente beim Vorliegen einer Störung, exemplarisch beim Ausfall der Busverbindung 44, erläutert werden. Es versteht sich, dass diese Erläuterungen entsprechend auch für den Fall geltenden, dass z.B. der Drehzahlsensor 50 ausfällt. Wie oben ist der dritte Gang eingelegt. Eigentlich wäre jetzt in den vierten Gang zu schalten. Da das Steuermodul 42 aufgrund der unterbrochenen Busverbindung 44 nicht von dem Steuermodul 34 angesprochen werden kann, ist eine Motorsteuerung während des geplanten Gangwechsels nicht möglich. Nachfolgend wird deshalb eine möglich Schaltstrategie betrachtet werden, bei der nur Gänge des Teilgetriebes verwendet werden, welches zum Zeitpunkt der Störung aktiv ist. Hier ist es aufgrund des eingelegten dritten Gangs das erste Teilgetriebe 18. Anstatt in den vierten Gang zu wechseln, wird also hier in den fünften Gang gewechselt, der ebenfalls zum ersten Teilgetriebe 18 gehört. Es versteht sich, dass auch andere Schaltstrategien angewendet werden können. Ein Wechsel in den vierten Gang ist auch möglich, wird hier aber nicht detailliert beschrieben werden.

Die Fig. 2C zeigt die verschiedenen Drehzahlen n₁, n₂, und n_{M}. Die Fig. 2D zeigt die verschiedenen Drehmomente M₁, M₂, M_{Motor} und M_{Fahrer}.

In der ersten Phase laufen die Vorgänge analog zu den unter Bezug auf die Fig. 2A und 2B beschriebenen Vorgängen ab. Folgende Ausnahmen sind jedoch zu beachten. Die Drehzahl des Motors n_{M} wird aufgrund der fehlenden Busverbindung 44 nicht mehr durch das Steuermodul 34 geregelt werden können. Da der Fahrer (vgl. M_{Fahrer} in Fig. 2D) konstant Gas gibt, wird die Motordrehzahl n_{M} in der ersten Phase bis zu einem gewissen maximalen Wert nₘₐₓ anwachsen. Der Motor überträgt dabei trotzdem nur soviel Moment, wie vom Fahrer gewünscht, was von dem Steuermodul 42 geregelt wird. Die Drehzahl n₂ folgt der Motordrehzahl n_{M}, da die Abtriebswelle 22 mit der Eingangswelle 26 über die Trennkupplung 14 verbunden ist bzw. bleibt.

In der zweiten Phase der Fig. 2C und 2D wird der dritte Gang ausgelegt (Synchro öffnen) und der fünfte Gang eingelegt, was sich in einer abfallenden Drehzahl n₁ äußert, die sich auf die Drehzahl n_{ZG} des Zielgangs einstellt. Zu Beginn der dritten Phase wird damit begonnen, die zweite Trennkupplung 14 zu schließen. Der Motor dreht hoch, es wird ein positives Moment übertragen, weshalb die Drehzahl n₁ leicht ansteigt.

Da dem Steuerungsmodul 34 jedoch die Drehzahl des Motors über den Umweg des anderen, inaktiven Teilgetriebes bekannt ist und ferner auch Information zum geplanten Gangwechsel (3-5) sowie zur maximalen Drehzahl nₘₐₓ des Motors 28 vorliegt, kann eine Gangwechselrampenfunktion derart bestimmt werden, dass sich die Drehzahl n_{M} des Motors zum Zeitpunkt T4 (Erreichen des Schlepppunktes der ersten Trennkupplung 12) mit der gleichen Drehzahl dreht, wie das erste Teilgetriebe 18 (vgl. n₁).

Wenn, wie im vorliegenden Fall, die Datenbusverbindung 44 ausgefallen ist, und somit keine Möglichkeit besteht, das vom Motor 28 gelieferte Drehmoment direkt zu beeinflussen, besteht basierend auf der Gangwechsel-Rampenfunktion z.B. die Möglichkeit, das zu übertragende Drehmoment durch den Verstellmechanismus der ersten Trennkupplung 12 zu beeinflussen. Dies bedeutet mit anderen Worten, dass die erste Trennkupplung 12 derart geschlossen wird, dass die Motordrehzahl n_{M} mit dem Erreichen des Schlepppunktes T4 abrupt auf einen Wert abgefallen ist, der viel niedriger als die maximale Drehzahl nₘₐₓ ist. Der Schnittwert der Kurven n_{M} und n₁ ist durch das Übersetzungsverhältnis des Zielgangs und die Geschwindigkeit des Kraftfahrzeugs beinflusst.

Die Fig. 2C unterscheidet sich also von der Fig. 2A lediglich im Verlauf der Motordrehzahl n_{M} und der Drehzahl n₂, die n_{M} folgt. Die Figur 2D unterscheidet sich von der Fig. 2B im Verlauf des Motordrehmoments. Wenn eine Motorregelung nicht mehr möglich ist, bleibt das vom Motor übertragene Motordrehmoment M_{Motor} bei dem vom Fahrer gewünschten Drehmoment M_{Fahrer}. Die Motorsteuerung 42 ist durch die Steuerung 34 ja nicht ansprechbar. Trotzdem kann geschaltet werden. Das Moment M₂ der zweiten Welle 26 bleibt unverändert.

Im Nachfolgenden wird unter Bezugnahme auf Fig. 3 ein Verfahren gemäß der vorliegenden Erfindung zum Aufrechterhalten eines Betriebs eines Kraftfahrzeugs mit automatisiertem Getriebe erläutert werden, wenn es während des Betriebs zu Störungen innerhalb der Steuerung kommt, die normalerweise zu einem Abschalten bzw. Beenden des Betriebs des Kraftfahrzeugs führen würden.

Im Nachfolgenden wird der nichtbeschränkende Fall erläutert werden, dass die Busverbindung 44 ausgefallen ist.

Das Verfahren beginnt in einem Schritt S10. Dabei wird angenommen, dass der Bus 44 ausgefallen ist, so dass: (optional) ein beschränkter manueller Betrieb möglich ist; die Stellung des Gaspedals 46 eine Funktion der Drehzahl des Motors ist; entweder eine Anfahrstrategie oder eine Schaltstrategie anzuwenden ist; Befehle von der Bremse während eines Schaltvorgangs nicht ausgeführt werden; und das automatisierte Getriebe in einem Heimfahrmodus betrieben werden soll. Diese Voraussetzungen sind exemplarisch in einem Kasten S12 wiedergeben.

In einem Schritt S14 kann überprüft werden, ob die Sensoren 36 und 38 - und optional auch der Sensor 50 - überhaupt funktionieren. Sofern Sensoren für die Getriebeausgangswellen 30, 32 und für einen Wählhebel (WH) vorhanden sind, können diese ebenfalls im Schritt S14 überprüft werden. Liefert einer oder einige der Sensoren keine Information, kann dies schon zur Beendigung des Betriebs führen, wie es in einem Schritt S16 dargestellt ist.

Im Nachfolgenden wird davon ausgegangen, dass zumindest die Sensoren 36 und 38 für die Getriebeeingangswellen 24 und 26 sowie in der Fig. 1 nicht dargestellte Sensoren für die Getriebeausgangswellen 30, 32 und für einen Wählhebel funktionieren.

In einem Schritt S18 wird festgestellt, ob sich das Kraftfahrzeug bewegt, d.h. ob das Kraftfahrzeug steht, kriecht (sehr langsame Fahrt) oder anfährt. Fährt das Kraftfahrzeug normal, wird in einem Schritt S20 zum Schritt S32 gewechselt, der nachfolgend noch erläutert werden wird.

Wenn das Kraftfahrzeug steht, kriecht oder anfährt, werden alle Gänge ausgelegt, d.h. alle Synchronisierungseinrichtungen der Teilgetriebe 18 und 20 geöffnet, so dass es zu keiner kraftschlüssigen Verbindung zwischen den Getriebeeingangs- und Getriebeausgangswellen 24, 30 bzw. 26, 32 kommt. Anschließend werden beide Trennkupplungen (TK) 12, 14 geschlossen, so dass sie sich die Getriebeeingangswellen mit der Drehzahl des Motors 28 drehen können.

Liegt die Differenz der Drehzahl n₁ der ersten Getriebeeingangswelle 24 unter einer vorherbestimmten Toleranzgrenze (n_cal), fährt das erfindungsgemäße Verfahren mit einem Schritt S32 fort. Gibt es jedoch größere Unterschiede in den Drehzahlen n₁ und n₂. wird im Schritt S28 festgestellt, dass zumindest einer der Sensoren 36, 38 gestört sein muss. In diesem Fall werden in Schritt S28 beide Trennkupplungen 12 und 14 geöffnet und der Betrieb des Kraftfahrzeugs wird in einem Schritt S13 beendet.

Wenn das erfindungsgemäße Verfahren beim Schritt S32 angelangt ist, wird in einem nächsten Schritt S34 überprüft, ob der Wahlhebel WH auf eine Rückwärtsfahrt R eingestellt ist. Wenn nicht rückwärts gefahren werden soll, wird in einem Schritt S36 geprüft, ob sich das Kraftfahrzeug in einem Parkmodus P oder in einem Neutralmodus N befindet.

Wenn das Fahrzeug weder geparkt ist, noch kein Gang eingelegt ist, wird in einem Schritt S38 festgestellt, dass der Wahlhebel WH entweder in der Fahrstellung D oder der Stellung M für eine manuelle Schaltung steht. In diesem Fall wird in einem Schritt S40 abgefragt, ob z.B. ein gerader Gang (des zweiten Teilgetriebes 20) eingelegt ist. Wenn ein gerader Gang eingelegt ist, wird im Schritt S42 zu einem ungeraden Gang gewechselt. Ist bereits ein ungerader Gang eingelegt, werden alle geraden Gänge ausgelegt und die zweite Trennkupplung geschlossen. In diesem Fall dreht die zweite Getriebeeingangswelle 26 mit der Drehzahl n₂, die wiederum der Motordrehzahl n_mot entspricht (vgl. Schritt S44). Anschließend wird im Schritt S46 mit dem Schritt S50 "Fahren" fortgefahren.

Sollte im Schritt S34 festgestellt werden, dass der Fahrer rückwärts fahren will, werden alle ungeraden Gänge ausgelegt, wobei hier davon ausgegangen wird, dass der Rückwärtsgang R ein Teil des zweiten Teilgetriebes 20 ist. Dies geschieht im Schritt S52. Während des Schritts S52 wird auch der Rückwärtsgang eingelegt und die erste Trennkupplung 12 geschlossen. In diesem Fall dreht die erste Getriebeeingangswelle 24 mit der Drehzahl n₁, die wiederum der Motordrehzahl n_mot entspricht. Anschließend wird dann mit dem Schritt S46 fortgefahren.

Sollte die Abfrage des Schritts S36 ergeben, dass der Wählhebel in der Stellung P oder N steht, wird ein Gang entweder durch Betätigen des Wählhebels oder automatisiert im Heimfahrmodus ausgewählt. Anschließend werden beide Trennkupplungen 12 und 14 geöffnet (vgl. Schritt S54). Wenn diese Aktionen durchgeführt sind, wird zum Schritt S46 gewechselt. Wenn aufgrund des Schritts S46 zum Schritt S50 fortgeschritten wird, wird in einer Abfrage S56 abgefragt, ob der Wahlhebel auf Rückwartsfahrt R, auf Vorwärtsfahrt D oder auf manueller Betätigung M steht. Ist dem nicht so, so kehrt das erfindungsgemäße Verfahren zum Schritt S32 zurück.

Ist dem jedoch so, so wird in einer Abfrage S58 überprüft, ob das Kraftfahrzeug angefahren werden soll.

Fährt das Fahrzeug bereits, so wird ein Gang basierend auf der Stellung des Wahlhebels oder durch Befehle der Steuerung im Heimfahrmodus gewählt (vgl. Schritt S60). Anschließend wird z.B. mit Zugkraftunterbrechung geschaltet, wie es im Zusammenhang mit den Fig. 2C und D bereits erläutert wurde.

Wird im Schritt S58 festgestellt, dass angefahren werden muss, wird im Schritt S64 die Stellung des Pedals 46 überprüft. Wenn die Pedalstellung größer als ein vorgegebener Schwellenwert ist, wird das Fahrzeug im Schritt S66 angefahren. Anderenfalls wird in einer Abfrage S68 überprüft, ob die Geschwindigkeit des Fahrzeugs größer als Null ist. Wenn die Geschwindigkeit des Fahrzeugs größer als Null ist, das Fahrzeug rollt z.B. einen Berg hinunter, kann die Steuerung einen geeigneten Zeitpunkt abwarten, um den gewählten Gang im Schritt S60 einzulegen.

Die Steuerung bestimmt jedenfalls eine Gangwechsel-Rampenfunktion, in die schaltungstechnische Parameter einfließen, um sich an die jeweilige Situation und Anforderung anzupassen (Anfahren, Hochschalten oder Runterschalten, mit Zug oder Schub, Störung während der Fahrt oder beim Starten oder Ähnliches. Mit der Gangwechsel-Rampenfunktion kann z.B. der Verstellweg der Kupplungselemente in Abhängigkeit von der Zeit beeinflusst werden, wenn es aufgrund des Ausfalls des Busses 44 nicht möglich, den Motor 28 zu beeinflussen. Wenn jedoch geeignete Vorkehrungen getroffen wurden, wie z.B. eine Datenverbindung 54 zwischen dem Steuermodul 34 und dem Motor 28 vorzusehen, kann die Steuerung 34 den Motor 28 auch direkt beeinflussen.

Aus diesen Ausführungen wird klar, wie wichtig die Kenntnis der Motordrehzahl sowie vorzugsweise die Kenntnis von der Größe eines die Motordrehzahl beeinflussenden Parameters, wie z.B. die Gaspedalstellung oder die Drosselklappenstellung, ist.

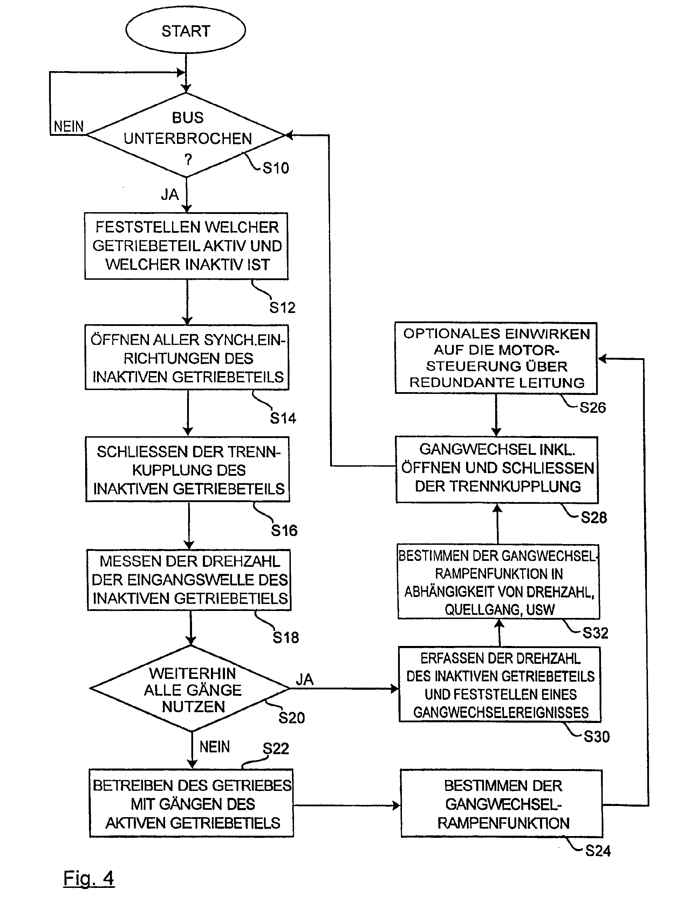

Bezug nehmend auf Fig. 4 wird eine vereinfachte Form des erfindungsgemäßen Verfahrens am Beispiel in der Fig. 1 dargestellten Antriebsstrangs 10 mit einem automatisierten Doppelkupplungsgetriebe bei Ausfall einer Datenbusverbindung 44 zwischen den Steuermodulen 42 und 34 erläutert werden.

In einem ersten Schritt S100 wird von einem der Steuermodule, das für die Durchführung eines Gangwechsels verantwortlich ist, wie z.B. vom Steuermodul 34, abgefragt, ob die Busverbindung 44 unterbrochen ist. Ist sie nicht unterbrochen, so wird die Abfrage in Intervallen mit beliebig wählbaren Abständen, vorzugsweise kurz vor der Durchführung eines Gangwechsels, wiederholt. Wird festgestellt, dass die Busverbindung 44 unterbrochen ist, wird anschließend vorzugsweise bestimmt, welches Teilgetriebe (18 oder 20) aktiv bzw. welches Teilgetriebe inaktiv ist. Im Weiteren wird davon ausgegangen, dass im Zeitpunkt der Störung der Datenbusverbindung 44 der dritte Gang des ersten Teilgetriebes 18 eingelegt ist. Das zweite Teilgetriebe 20 ist somit inaktiv, so dass die Trennkupplung 14 geöffnet ist. Die erste Trennkupplung 12 des ersten Teilgetriebes 18 ist hingegen geschlossen.

In einem weiteren Schritt S114 werden nun alle Synchronisierungseinrichtungen des inaktiven Teilgetriebes 20 geöffnet, d.h. die Gänge 2, 4 und 6 werden über ihre jeweiligen Synchronisierungskupplungen ausgelegt, soweit nicht bereits geschehen.

Anschließend wird in einem Schritt S116 die zweite Trennkupplung 14 des inaktiven Teilgetriebes 20 geschlossen. Dies ist möglich, da es keine kraftschlüssige Verbindung zwischen der zweiten Getriebeeingangswelle 26 und der zweite Getriebeausgangswelle 32 gibt. Die Synchronisierungseinrichtungen des Teilgetriebes 20 sind ja offen. Die erste Trennkupplung 12 ist weiterhin geschlossen und bewirkt somit eine kraftschlüssige Verbindung der ersten Getriebeeingangswelle 24 mit der ersten Getriebeausgangswelle 30. Die Motorabtriebswelle 22, die erste Getriebeeingangswelle 24, die zweite Getriebeeingangswelle 26 sowie die erste Getriebeausgangswelle 30 drehen alle mit der gleichen Geschwindigkeit, nämlich der Drehzahl n_{M} des Motors 28. Diese Drehzahl wird in einem weiteren Schritt S118 gemessen.

In einem Schritt S120 wird optional entschieden, ob weiterhin alle Gänge des Doppelkupplungsgetriebes genutzt werden sollen.

In einem Schritt S122 kann entschieden werden, dass das Kraftfahrzeug nur noch mit den Gängen des aktiven Teilgetriebes 18, d.h. mit dem ersten, dem dritten und dem fünften Gang betrieben wird. Dies reicht aus, um das Kraftfahrzeug zumindest nach Hause oder in die nächste Werkstatt zu fahren. Der Fahrkomfort kann zwar im Vergleich zum störungsfreien Betrieb dabei möglicherweise leiden. Jedoch fällt das Kraftfahrzeug aufgrund des Datenbuszusammenbruchs nicht vollständig aus.

In einem Schritt S124 wird dann basierend auf der Drehzahl n₂ der zweiten Getriebeeingangswelle 26, die vorzugsweise kontinuierlich erfasst wird, im Falle eines Gangwechselbefehls eine Gangwechsel-Rampenfunktion bestimmt. Die Gangwechsel-Rampenfunktion kann in Form eines zeitabhängigen Verstellbefehls für die nicht dargestellten Kupplungsaktuatoren der Trennkupplung 12 bzw. 14 umgesetzt werden. Da die datentechnische Verbindung nicht nur vom Motorsteuerungsmodul 42 in Richtung des Kupplungs-Getriebesteuermoduls 34, sondern auch in umgekehrter Richtung, unterbrochen ist, ist es nicht möglich, mit Hilfe der Motorsteuerung 42 die Drehzahl des Motors 28 während des Schaltvorgangs, z.B. vom dritten Gang in den fünften Gang, zu beeinflussen. Da das Steuermodul 34 jedoch weiß, dass vom dritten in den fünften Gang gewechselt werden soll und da das Steuermodul 34 auch permanent Kenntnis von der Motordrehzahl hat, da die Drehzahl n₂ der zweiten Getriebeeingangswelle 26 vorzugsweise kontinuierlich gemessen wird, kann das Steuermodul 34 den Schaltvorgang z.B. dadurch variieren, wie schnell bzw. wie langsam die Trennkupplung 12 geöffnet und geschlossen wird. Dies kann zwar möglicherweise vom Fahrer in Form eines Ruckelns des Fahrzeugs wahrgenommen werden. Da es sich jedoch bei dem Verfahren gemäß der vorliegenden Erfindung um ein Notfallverfahren handelt, ist dies akzeptabel. Anderenfalls könnte das Kraftfahrzeug gar nicht mehr bewegt werden.

Gibt es jedoch eine redundante Datenverbindung 54' von dem Kupplungs- und Getriebemodul 34 in Richtung des Motorsteuerungsmoduls 42, so kann die Motordrehzahl n_{M} direkt über den Motor 28 beeinflusst werden. Alternativ könnte das Kupplungs- und Getriebesteuermodul 34 auch direkt über eine Leitung 54 mit dem Motor 28 regeltechnisch verbunden sein. Diese Option ist im optionalen weiteren Verfahrensschritts S126 gezeigt.

Im Ergebnis wird ein Gangwechsel durchgeführt (vgl. Schritt S128). Sobald der Gangwechsel vollführt ist, kehrt das erfindungsgemäße Verfahren zum Anfang zurück.

In einer weiteren Ausführungsform des erfindungsgemäßen Verfahrens könnten auch beide Teilgetriebe 18 und 20 weiterhin genutzt werden, wenn im Schritt S120 entschieden wird, dass weiterhin alle Gänge zu nutzen sind. Das Steuerungsmodul 34 erfasst dann vorzugsweise die Drehzahl n₁ bzw. n₂ des inaktiven Teilgetriebes und stellt durch Überwachen dieser Drehzahlen, insbesondere des zeitlichen Verlaufs bzw. der zeitlichen Änderungen dieser Drehzahlen gangwechselauslösende Ereignisse fest. Ändert sich die Drehzahl einer der Getriebeeingangswellen 24, 26 derart, dass ein gangwechselauslösendes Ereignis vorliegt, so bestimmt das Steuermodul 34 die zugehörige Gangwechsel-Rrampenfunktion. Wenn im Falle des Doppelgetriebes weiterhin beide Teilgetriebee 18 und 20 genutzt werden sollen, kann es von Vorteil sein, wenn man beide Drehzahlen n₁ und n₂ der Getriebeeingangswellen 24, 26 vorzugsweise gleichzeitig überwacht und zum Zwecke einer Plausibilisierung auch ständig miteinander vergleicht.

Es versteht, dass das erfindungsgemäße Verfahren auch derart durchgeführt werden kann, dass vorab festgelegt wird, welche Getriebeeingangswelle vorrangig zum Bestimmen der Motordrehzahl verwendet wird. Vorzugsweise wird jedoch das Teilgetriebe hergenommen, das inaktiv ist. Ferner ist es möglich, die Drehzahl alternierend zwischen den beiden Teilgetrieben zu bestimmen.

Über die so ermittelte Drehzahl des Motors ist es ferner möglich eine Information über ein Gasbetätigungselement, wie z.B. die Stellung des Gaspedals 46, zu erlangen. Die Motorsteuerung 42 liefert aufgrund des Zusammenbruchs der Datenbusverbindung 44 diese Information bekanntlich nicht mehr an das Steuermodul 34. Der Wunsch des Fahrers kann jedoch unter Verwendung der ermittelten Motordrehzahl simuliert werden.

Dazu wird vorab eine Motordrehzahl in Form eines Schwellenwerts festgelegt, dem anfänglich eine vorbestimmten Stellung des Gaspedals 46 zugeordnet ist. Dieser Schwellenwert sollte größer als die Drehzahl des Motors im Leerlauf sein. Wenn nun eine momentane Drehzahl des Motors oberhalb dieses Schwellenwerts liegt, wird dieser momentanen Drehzahl eine Stellung des Gaspedals zugeordnet, die um das gleiche Verhältnis größer ist als die erfasste Drehzahl größer als der Schwellenwert ist. Dieser, die Stellung des Gaspedals repräsentierende, Wert wird dem Schwellenwert neu zugeordnet, d.h. der ursprüngliche Wert für die anfängliche Stellung des Gaspedals wird gegen den Wert für die neue Stellung des Gaspedals ausgetauscht. Dieser Vorgang wiederholt sich so oft, bis die Drehzahl des Motors einen Wert erreicht, der kleiner als der Schwellenwert ist. In diesem Fall wird dem Schwellenwert die Pedalstellung 0 zugeordnet. Auf diese Weise ist es möglich, die Stellung z.B. des Gaspedals zu simulieren. Diese Größe kann unter Anderem verwendet werden, um zu entscheiden, ob ein Gang gewechselt werden soll oder nicht.

Es versteht sich, dass die obigen Ausführungen auch auf ein automatisiertes, einfaches Schaltgetriebe anwendbar sind. Die Drehzahl des Motors lässt sich immer bestimmen, indem alle Synchronisierungseinrichtungen geöffnet werden, so dass keine kraftschlüssige Verbindung zwischen der Getriebeeingangswelle und der Getriebeausgangswelle vorliegt. Schließt man dann die Trennkupplung, so dreht die Getriebeeingangswelle mit der gleichen Geschwindigkeit wie die Motorabtriebswelle. Natürlich wird ein so geregelter Schaltvorgang vielleicht etwas länger dauern als ein gewöhnlicher Schaltvorgang. Nichtsdestotrotz wird verhindert, dass das Fahrzeug aufgrund eines Ausfalls der Busverbindung 44 liegen bleibt.

Bei einem Doppelgetriebe können beide Teilgetriebe eingesetzt werden, wobei es dann für einen kurzen Moment, wenn beide Trennkupplungen offen sind, keine verifizierte Information zur Drehzahl des Motors gibt, so dass die Trennkupplung ohne Kenntnis der Drehzahl zum Übertragen eines gewünschten Drehmoments in Form eines offenen Regelkreises betätigt wird. Die benötigten Informationen können dazu aus entsprechenden Kennfeldern abgeleitet werden. Wenn hingegen nur ein einziges Teilgetriebe im Notfallmodus/ Heimfahrmodus verwendet wird, liegt ein geschlossener Regelkreis vor, da man die Motordrehzahl kontinuierlich über das inaktive Teilgetriebe abrufen kann.

## Patentansprüche

1. Verfahren zum Aufrechterhalten eines Gangwechselbetriebs eines automatisierten Getriebes (16), insbesondere eines Doppelkupplungsgetriebes, für ein Kraftfahrzeug bei einem Ausfall eines Motordrehzahlgebers (50) oder einer Busverbindung (44) zwischen einem ersten Steuermodul (42), das einen über mindestens eine Trennkupplung (12, 14) mit dem Getriebe (16) verbindbaren Motor (28) ansteuert, und einem zweiten Steuermodul (34), das Stellglieder (12, 14) zum kraftübertragenden Verbinden des Motors (28) mit dem Getriebe (16) bzw. mit einem oder mehreren Antriebsrädern (33) ansteuert, wobei über die Busverbindung (44) gangwechselrelevante Daten, vorzugsweise eine Motordrehzahl (n_{M}), zwischen den Steuermodulen (34, 42) ausgetauscht werden, mit den folgenden Schritten:
Überprüfen, ob eine Drehzahl (n_{M}; n₁, n₂) einer Motorwelle (22), die von einem dafür bestimmten Sensor (50) eines der Steuermodule (42) erfasst wird, von dem einem Steuermodul (42, 34) über die Busverbindung (44) an das andere Steuermodul (34, 42) übertragbar ist; und
Durchführen der folgenden Schritte, wenn die Drehzahl nicht übertragbar ist:
Öffnen aller dem Getriebe (16) bzw. einem Teilgetriebe (18, 20) zugeordneten Synchronisierungseinrichtungen, so dass von der Motorwelle (22) keine Kraft mehr über eine Getriebewelle an das bzw. die Antriebsräder (33) des Kraftfahrzeugs übertragbar ist;
Schließen der Trennkupplung (12, 14), die dem Getriebe (16) bzw. dem Teilgetriebe (18, 20) mit den geöffneten Synchronisiereinrichtungen zugeordnet ist, falls diese Trennkupplung (12, 14) nicht geschlossen ist;
Erfassen einer Drehzahl (n₁, n₂; n_{M}) einer anderen Welle (24, 26), insbesondere der Getriebegelle, die mit der Motorwelle (22) über die Trennkupplung (12, 14) verbunden ist, mittels eines dafür bestimmten Sensors (36, 38) des zweiten Steuermoduls (34); und
Bestimmen einer Gangwechselrampenfunktion für eines der Steuermodule (34, 42), vorzugsweise für das zweite Steuermodul (34), basierend auf der erfassten Drehzahl, insbesondere aus einem Kennlinienfeld, um einen Schaltvorgang von einem Quellgang in einen Zielgang durchführen zu können,
wobei basierend auf der erfassten Drehzahl (n₁, n₂), in Reaktion auf einen Gangwechselbefehl (56), der entweder von einem der Steuermodule (34, 42) oder einem Betreiber des Kraftfahrzeugs erteilt wird, ein Vorgang zum Wechseln eines Gangs des Getriebes (16) initiiert wird.

2. Verfahren nach Anspruch 1, wobei die Gangwechselrampenfunktion einen oder mehrere Parameter aus einer Gruppe aufweisend Parameter für eine Quellgang-Motordrehzahl (n_{M}), eine Zielgangmotordrehzahl (n_{ZG}), eine Gaspedalstellung (48) und/oder eine Drosselklappenstellung (54), und/oder einen zeitabhängigen Verstellweg für Kupplungselemente der dem Zielgang zugeordneten Trennkupplung (12, 14) repräsentiert.

3. Verfahren nach Anspruch 1 oder 2, wobei die Drehzahl (n_{M}) über einen vordefinierten Zeitraum, vorzugsweise kontinuierlich, erfasst wird, um eine Drehzahlhistorie zu erzeugen.

4. Verfahren nach einem der vorhergehenden Ansprüche, wobei aus der erfassten Drehzahl eine Stellung eines Gasbetätigungselements (48) abgeleitet wird.

5. Verfahren nach Anspruch 1, wobei die Trennkupplung (12, 14) geöffnet, ggf. eine Synchronisierungseinrichtung eines eingelegten Quellgangs geöffnet, ein geeigneter Zielgang durch Schließen einer zugehörigen Synchronisierungseinrichtung eingelegt und die Trennkupplung (12, 14) anschließend erneut geschlossen wird.

6. Verfahren nach Anspruch 5, wobei die Gangwechselrampenfunktion während des Zeitraums (T4-T1) zwischen dem Öffnen und dem erneuten Schließen der Trennkupplung (12, 14) angewendet wird.

7. Verfahren nach einem der vorhergehenden Ansprüche, wobei das Getriebe ein Doppelkupplungsgetriebe mit einem ersten Teilgetriebe (18) und einer ersten Trennkupplung (12) und mit einem zweiten Teilgetriebe (20) und einer zweiten Trennkupplung (14) ist, wobei alle Synchronisierungseinrichtungen eines inaktiven Teilgetriebes (20) geöffnet werden und die Trennkupplung (14) des inaktiven Teilgetriebes (20) geschlossen wird, der gerade keine Kraft vom Motor (28) an das oder die Antriebsräder (33) überträgt, um die Drehzahl am inaktiven Teilgetriebe (18) zu erfassen.

8. Verfahren nach Anspruch 7, wobei die Drehzahl (n₂) des inaktiven Teilgetriebes (20) kontinuierlich bestimmt wird.

9. Verfahren nach einem der vorhergehenden Ansprüche, mit den folgenden weiteren Schritten:
Abfragen, ob eine Information (48) zu einer aktuellen Stellung eines Gasbetätigungselements (46) in Form eines Gasbetätigungsparameters (48) über die Busverbindung (44) übertragbar ist;
wenn keine Information übertragbar ist, Abfragen der erfassten Drehzahl (n₁; n₂);
Vergleichen der erfassten Drehzahl (n₁; n₂) mit einem Schwellenwert, wobei der Schwellenwert eine vordefinierte Motordrehzahl ist, wobei der vordefinierten Motordrehzahl eine vordefinierte Stellung des Gasbetätigungselements (46) in einem betätigten Zustand entspricht;
wenn die erfasste Drehzahl kleiner als der Schwellenwert ist, Einstellen eines Gasbetätigungsparameters auf Null, so dass eine Stellung des Gasbetätigungselements in einer unbetätigten Stellung repräsentiert wird; oder
wenn die erfasste Drehzahl größer als der Schwellenwert ist, Erhöhen des Gasbetätigungsparameters um einen der Differenz entsprechenden Wert.

10. System zum Aufrechterhalten des Betriebs eines automatisierten Getriebes, insbesondere eines Doppelkupplungsgetriebes, für ein Kraftfahrzeug bei einem Ausfall einer Busverbindung zwischen einem ersten Steuermodul, das einen mit dem Getriebe über mindestens eine Trennkupplung verbindbaren Motor ansteuert, und einem zweiten Steuermodul, das Stellglieder zum kräfteübertragenden Verbinden des Motors mit dem Getriebe bzw. mit einem oder mehreren Antriebsrädern ansteuert, wobei über die Busverbindung gangwechselrelevante Daten, vorzugsweise eine Motordrehzahl, zwischen den Steuermodulen ausgetauscht werden, wobei eines der Steuermodule zum Durchführen des Verfahrens gemäß einem der vorhergehenden Ansprüche 1 bis 9 eingerichtet ist.

## Claims

1. A method for maintaining operation of an automated transmission (16), particularly a dual clutch transmission, of a motor vehicle in case of a failure of an engine speed sensor (50) or a bus connection (44) between a first control module (42), which controls an engine (28) being connectable to the transmission (16) through at least one separation clutch (12, 149, and a second control module (34) controlling regulating units (12, 14) for connecting the engine (28) to the transmission (16) or to one or more driving wheels (34) in a force-transmitting manner, wherein gear-shift relevant data, preferably a number of revolutions (nₑ) of the engine, is exchanged between the control modules (34, 42) over the bus connection (44), the method comprising the following steps:
checking whether a number of revolutions (n_{M}; n₁, n₂) of an engine shaft (22), which is detected by a sensor (50) of one of the control modules (42), can be transmitted from the one of the control modules (34, 42) via the bus connection (44) to the other one of the control modules (42, 34); and
performing the following steps, if the number of revolutions cannot be transmitted:
opening all synchronizer devices assigned to the transmission (16), or to one of the partial transmissions (18, 20), so that the engine shaft (22) can no longer transmit a force via a transmission shaft to the driving wheels (33) of the motor vehicle;
closing the separations clutch (12, 14) assigned to the transmission (16), or the partial transmission (18, 20), comprising the opened synchronizer devices, if this separation clutch (12, 14) is not closed;
detecting a number of revolutions (u₁, n₂; n_{M}) of an other shaft (24, 26), particularly of the transmission shaft, which is connected to the engine shaft (22) through the separation clutch (12, 14) by means of an other sensor (36, 38) of the second control module (34); and
determining a gear-shift ramp function for one of the control modules (34, 42), preferably for the second control module (42), based on the detected number of revolutions, particularly from a field of characteristic lines, for allowing performance of a shifting process from a source gear to a target gear,
wherein, based on the detected number of revolutions (n₁, n₂) a process for shifting a gear of the transmission (16) is initiated in response to a shift-gear command (46), which is issued either by the control module (34, 42) or an operator of the motor vehicle.

2. The method of claim 1, wherein the gear-shift ramp function represents one or more parameters being selected from a group comprising a parameter dedicated to: a number of revolutions (nₑ) of the engine in a source gear, a number of revolutions (n_{TG}) of the engine in a target gear, a position (48) of a gas pedal and a position (54) of a throttle plate, and/or a time-dependent displacement path for a clutch element of the separation clutch (12, 14) associated with the target gear.

3. The method of claim 1 or 2, wherein the number of revolutions (n_{M}) is detected over a predefined period of time, preferably continuously, in order to generate a history of the numbers of revolutions.

4. The method of any one of the preceding claims, wherein a position of a gas-actuating element (48) is derived from the detected number of revolutions.

5. The method of claim 1, wherein the separation clutch (12, 14) is opened, a synchronizer device of an engaged source gear, if necessary, is opened, an appropriate target gear is engaged by closing an associated synchronizer device, and the separation clutch (12, 14) is subsequently closed again.

6. The method of claim 5, wherein the gear-shift ramp function is applied during the period of time (T4-T1) between the opening and the again closing of the separation clutch (12, 14).

7. The method of any of the preceding claims, wherein the transmission is a dual clutch transmission having a first partial transmission (18) and a first separation clutch (12), and a second partial transmission (20) and a second separation clutch (14), wherein all synchronizer devices of an inactive partial transmission (20) are opened and the separation clutch (14) of the inactive partial transmission is closed, which is just not transmitting a force from the engine (28) to the driving wheels (33), in order to detect the number of revolutions at the inactive partial transmission (18).

8. The method of claim 7, wherein the number of revolutions (n₂) of the inactive partial transmission (20) is determined continuously.

9. The method of any of the preceding claims further comprising the steps of:
requesting whether an information (48) on the current position of a gas-actuating element (46) in terms of a gas-actuating parameter (48) can be transmitted over the bus connection (44);
if any information can be transmitted, requesting the detected number of revolutions (n₁; n₂);
comparing the detected number of revolutions (u₁; n₂) to a threshold value, wherein the threshold value is a predefined number of revolutions of the engine, wherein the predefined number of revolutions of the engine corresponds to a predefined position of the gas actuating element (48) in an actuated state;
if the detected number of revolutions is less than the threshold value, setting a gas-actuating parameter to zero so that a position of the gas-actuating element is represented in a non-actuated state;
or
if the detected number of revolutions is greater than the threshold value, increasing the gas-actuating parameter by a value corresponding to the difference.

10. System for maintaining the operation of an automated transmission, particularly a dual clutch transmission, for a motor vehicle during failure of a bus connection between a first control module controlling an engine connectable to the transmission through at least one separation clutch, and a second control module controlling regulating units for connecting the engine to the transmission or to driving wheels in a force-transmitting manner, wherein gear-shift relevant data, preferably a number of revolutions of the engine, is exchanged between the control modules over the bus connection, wherein one of the control modules is adapted for performing the method in accordance with one of the preceding claims 1 to 9.

## Revendications

1. Procédé de maintien d'un mode de fonctionnement de changement de rapport d'une boîte de vitesses automatisée (16), notamment d'une boîte de vitesses à double embrayage, pour un véhicule automobile, en cas de panne d'un capteur de régime moteur (50) ou d'une liaison de bus (44) entre un premier module de commande (42) commandant un moteur (28) pouvant être relié à la boîte de vitesses (16) via au moins un embrayage de coupure (12, 14) et un deuxième module de commande (34) commandant des maillons de réglage (12, 14) servant à relier par transmission de forces le moteur (28) à la boîte de vitesses (16) et/ou à une ou plusieurs roues motrices (33), les données importantes pour le changement de rapport, de préférence un régime moteur (n_{M}), étant échangées entre les modules de commande (34, 42) via la liaison de bus (44), avec les étapes suivantes :
vérification de si un régime (n_{M} ; n₁, n₂) d'un arbre de moteur (22) est détecté par un capteur (50), prévu à cet effet, d'un des modules de commande (42), un module de commande (42, 34) pouvant être transmis à l'autre module de commande (34, 42) par ledit capteur via la liaison de bus (44) ; et
mise en oeuvre des étapes suivantes, lorsque le régime ne peut pas être transmis :
ouverture de tous les dispositifs de synchronisation associés à la boîte de vitesses (16) et/ou à une partie de boîte de vitesses (18, 20), de sorte qu'aucune force ne peut plus être transmise à la et/ou aux roues motrices (33) du véhicule automobile par l'arbre de moteur (22) via un arbre de boîte de vitesses ;
fermeture de l'embrayage de coupure (12, 14) associé à la boîte de vitesses (16) et/ou à la partie de boîte de vitesses (18, 20) avec les dispositifs de synchronisation ouverts dans le cas dans lequel ledit embrayage de coupure (12, 14) n'est pas fermé ;
détection d'un régime (n₁, n₂ ; n_{M}) d'un autre arbre (24, 26), notamment de l'arbre de boîte de vitesses relié à l'arbre de moteur (22) via l'embrayage de coupure (12, 14), à l'aide d'un capteur (36, 38) prévu à cet effet du deuxième module de commande (34) ; et
détermination d'une fonction de rampe de changement de rapport pour un des modules de commande (34, 42), de préférence pour le deuxième module de commande (34), sur la base du régime détecté, notamment à partir d'un champ de courbes caractéristiques, afin de mettre en oeuvre un processus de changement de vitesse d'un rapport source vers un rapport cible ;
un processus de changement d'un rapport de la boîte de vitesses (16) étant entamé sur la base du régime détecté (n₁, n₂), en réaction à un ordre de changement de rapport (56) envoyé soit par un des modules de commande (34, 42) soit par un utilisateur du véhicule automobile.

2. Procédé selon la revendication 1, la fonction de rampe de changement de rapport représentant un ou plusieurs paramètres parmi un groupe présentant les paramètres d'un régime moteur de rapport source (n_{M}), d'un régime moteur de rapport cible (n_{ZG}), d'une position de pédale d'accélération (48) et/ou d'une position d'étranglement (54) et/ou d'une course de déplacement dépendant du temps des éléments d'embrayage de l'embrayage de coupure (12, 14) associé au rapport cible.

3. Procédé selon la revendication 1 ou 2, le régime (n_{M}) étant détecté sur une durée prédéfinie, de préférence en continu, pour produire un historique de régime.

4. Procédé selon l'une quelconque des revendications précédentes, une position d'un élément d'actionnement des gaz (48) détectée étant déduite du régime.

5. Procédé selon la revendication 1, l'embrayage de coupure (12, 14) étant ouvert, le cas échéant un dispositif de synchronisation d'un rapport source engagé étant ouvert, un rapport cible adapté étant engagé par fermeture d'un dispositif de synchronisation associé et l'embrayage de coupure (12, 14) étant ensuite de nouveau fermé.

6. Procédé selon la revendication 5, la fonction de rampe de changement de rapport étant utilisée pendant la durée (T4-T1) présente entre l'ouverture et la nouvelle fermeture de l'embrayage de coupure (12, 14).

7. Procédé selon l'une quelconque des revendications précédentes, la boîte de vitesses étant une boîte de vitesses à double embrayage dotée d'une première partie de boîte de vitesses (18) et d'un premier embrayage de coupure (12) et dotée d'une deuxième partie de boîte de vitesses (20) et d'un deuxième embrayage de coupure (14), tous les dispositifs de synchronisation d'une partie de boîte de vitesses (20) inactive étant ouverts et l'embrayage de coupure (14) de la partie de boîte de vitesses (20) inactive étant fermé, celui-ci ne transmettant absolument aucune force du moteur (28) à la ou aux roues motrices (33), pour détecter le régime au niveau d'une partie de boîte de vitesses (18) inactive.

8. Procédé selon la revendication 7, le régime (n₂) de la partie de boîte de vitesses (20) inactive étant déterminé en continu.

9. Procédé selon l'une quelconque des revendications précédentes, avec les étapes supplémentaires suivantes :
interrogation de si une information (48) relative à une position actuelle d'un élément d'actionnement des gaz (46) peut être transmise sous la forme d'un paramètre d'actionnement des gaz (48) via la liaison de bus (44) ;
lorsqu'aucune information ne peut être transmise, interrogation du régime (n₁ ; n₂) détecté ;
comparaison du régime détecté (n₁ ; n₂) avec une valeur seuil, la valeur seuil étant un régime moteur prédéfini, une position prédéfinie de l'élément d'actionnement des gaz (46) correspondant au régime moteur prédéfini dans un état actionné ;
lorsque le régime détecté est inférieur à la valeur seuil, réglage d'un paramètre d'actionnement des gaz sur zéro, de sorte qu'une position de l'élément d'actionnement des gaz est présentée dans une position non actionnée ; ou
lorsque le régime détecté est supérieur à la valeur seuil, augmentation du paramètre d'actionnement des gaz d'une valeur correspondant à la différence.

10. Système de maintien du fonctionnement d'une boîte de vitesses automatisée, notamment d'une boîte de vitesses à double embrayage, pour un véhicule automobile, en cas de panne d'une liaison de bus entre un premier module de commande commandant un moteur pouvant être relié à la boîte de vitesses via au moins un embrayage de coupure et un deuxième module de commande commandant des maillons de réglage servant à relier par transmission de forces le moteur à la boîte de vitesses et/ou à une ou plusieurs roues motrices, les données importantes pour le changement de rapport, de préférence un régime moteur, étant échangées entre les modules de commande via la liaison de bus, un des modules de commande étant conçu de façon à mettre en oeuvre le procédé selon l'une quelconque des revendications 1 à 9.
